# FASCICULE DE BREVET EUROPEEN

(11) **EP 0 755 059 B1**
(45) Date de publication et mention de la délivrance du brevet: **02.02.2000**
(21) Numéro de dépôt: 96401585.3
(22) Date de dépôt: 17.07.1996
(51) Int. Cl.: H01B 13/32, G02B 6/44

(54) **Procédé d'injection contrôlée d'une matière de remplissage dans un tube de protection de fibres optiques et installation de mise en oeuvre du procédé**
Füllvorrichtungsverfahren eines Schutzrohr für optische Fasern mit einer Füllmasse und zugehörige Vorrichtung zur Durchführung des Verfahrens
Controlled injection process for a tube protecting optical fibers and installation for performing said process

(30) Priorité: 20.07.1995 FR 9508806
(43) Date de publication de la demande: 22.01.1997
(73) Titulaire: ALCATEL, 75008 Paris (FR)
(72) Inventeur: Le Gac, Renaud, 62100 Calais (FR); Libert, Jean-François, 62360 Pont de Briques (FR)
(74) Mandataire: Buffière, Michelle

(56) Documents cités:
- WO-A-91/01506
- DE-A- 3 504 754
- GB-A- 2 193 450
- US-A- 4 508 423
- PATENT ABSTRACTS OF JAPAN vol. 010, no. 052 (P-432), 28 Février 1986 & JP-A-60 195508 (SHOWA DENSEN DENRAN KK), 4 Octobre 1985,

## Description

La présente invention concerne la fabrication d'un câble à fibres optique ou d'un module optique d'un tel câble. Elle porte plus particulièrement sur un procédé d'injection contrôlée d'une matière de remplissage dans un tube de protection de fibres optiques, lors de la réalisation du module ou du câble à fibres optiques et sur une installation d'injection mettant en oeuvre ce procédé.

De manière bien connue, les fibres optiques mises sous tube de protection sont en général prévues en surlongueur dans le tube et sont souvent noyées dans une matière de remplissage du tube. Le tube est métallique ou en plastique selon l'application et la structure globale du câble concerné pouvant être un câble sous-marin, enterré, aérien ou autre. La matière de remplissage est une matière visqueuse, par exemple une gelée ou une graisse ou une autre matière convenable d'amortissement pour un maintien des fibres et/ou de blocage de progression d'éventuelles infiltrations d'eau dans le tube.

Le document US-A-4 508 423 décrit la réalisation d'un module à fibres optiques mises sous tube métallique de protection et noyées dans une matière de remplissage. Le tube est réalisé à partir d'une bande métallique déformée en tube et est fermé par soudure laser, au fur et à mesure de son défilement. Les fibres sont introduites dans le tube de protection, à l'aide d'un tube de guidage engagé dans le tube de protection non fermé et s'étendant au delà du point de soudure laser. La matière de remplissage est injectée sous pression par une conduite d'injection qui s'étend également au-delà du point de soudure.

Le document GB-A 2 193 450 décrit la réalisation d'un module analogue à fibres optiques, dont le tube de protection est en plastique et est extrudé autour des fibres. La matière de remplissage est injectée, simultanément avec l'extrusion du tube, par une tête d'injection qui est couplée à la filière d'extrusion et présente un canal d'injection débouchant dans la zone d'extrusion. Un capteur de pression dans la tête d'injection contrôle la quantité de matière qui lui est délivrée par une pompe, pour augmenter cette quantité si la pression détectée baisse et la diminuer dans le cas contraire.

Dans ces réalisations connues, le tube de protection des fibres n'est jamais complètement rempli de matière de remplissage. Ce remplissage incomplet résulte d'une part des variations des dimensions internes des tubes et/ou des variations du volume occupé par les fibres reçues dans chaque tube et d'autre part de la nécessité d'éviter les risques de reflux de la matière injectée jusqu'à la région de soudure laser du tube métallique, ou pareillement jusqu'à la région amont de la zone d'extrusion du tube en plastique, pour ne pas perturber l'opération concernée.

Dans la pratique courante, le taux de remplissage visé est en conséquence au plus de 91 %. Ce taux maximal visé conduit alors à un taux réel de remplissage qui est variable et compris entre 85 à 97 % et n'est donc pas toujours satisfaisant pour que la matière de remplissage assure pleinement ses fonctions.

Le document WO-A-9101506 divulgue également de réguler le débit de matière de remplissage injectée dans le tube métallique soudé de protection des fibres. Cette régulation de débit est faite à partir de la mesure de pression d'un gaz neutre introduit dans ce tube par un tuyau d'arrivée juxtaposé au tuyau d'injection de la matière de remplissage et débouchant en amont de celui-ci. Une augmentation brutale de la pression de gaz dans le tuyau d'arrivée traduit que son extrémité est bouchée par la matière de remplissage injectée et donne lieu à une diminution du débit de la matière injectée. Une diminution brutale ultérieure de la pression de gaz mesurée donne lieu à une augmentation du débit de matière injectée. Ce mode de régulation présente plusieurs inconvénients. Il implique notamment d'avoir un tuyau d'arrivée de gaz dans le tube métallique soudé alors que l'espace dans celui-ci est très réduit, ou de canaliser ce gaz dans le tube capillaire de guidage des fibres, ce qui permet au gaz de s'échapper par l'amont et peut nuire à l'avance contrôlée des fibres. En outre, il exige que la pression d'introduction de ce gaz soit choisie convenablement, ce qui ne semble pas évident et aisé. En effet, si elle n'est pas assez élevée, la matière de remplissage peut boucher de manière définitive l'extrémité du tuyau d'arrivée de gaz. Au contraire, si elle est trop forte, la matière peut créer des remous en avant vers le point de soudure et peut également emprisonner des bulles de gaz. Dans l'un ou l'autre des cas, le système risque d'être "aveugle" en ne régulant pas comme souhaité le débit de matière de remplissage injectée et de créer d'autres perturbations ou défauts.

La présente invention a pour but d'assurer un remplissage total ou quasi total du tube de protection des fibres optiques, tout en évitant les risques précités lors de l'injection de la matière de remplissage.

Elle a pour objet un procédé d'injection contrôlée d'une matière de remplissage dans un tube de protection de fibres optiques, au cours de la fermeture étanche du tube en un point de fermeture sur une ligne d'avance dudit tube et de mise des fibres dans ledit tube, consistant à réguler ledit débit de matière injectée dans ledit tube, en un point d'injection situé en aval dudit point de fermeture, à partir d'un signal de détection de la position du front de la matière contenue dans ledit tube par rapport à un premier point de détection situé en aval dudit point de fermeture, caractérisé en ce qu'il consiste à effectuer la mesure directement en ce premier point de détection d'une propriété physique spécifique définie que présente ledit tube ou ladite matière elle-même et qui varie avec la position du front de matière par rapport à ce point de détection, pour détecter la position du front de la matière par rapport à ce premier point de détection.

Elle a également pour objet une installation de mise en oeuvre du procédé, comportant ladite ligne équipée de moyens de mise des fibres dans ledit tube de protection, de moyens d'injection à débit réglable de ladite matière d'injection dans ledit tube de protection, et de moyens de régulation dudit débit, caractérisée en ce que lesdits moyens de régulation de débit comportent un capteur sensible à ladite propriété, monté en chaque point de détection et relié auxdits moyens d'injection.

En particulier :
- chaque capteur est monté sur l'extérieur et en regard du tube de protection ou à l'intérieur du tube de protection.
- chaque capteur est sensible à la température du tube de protection au niveau du point de détection concerné, ou à un effet dû à la matière de remplissage elle-même.

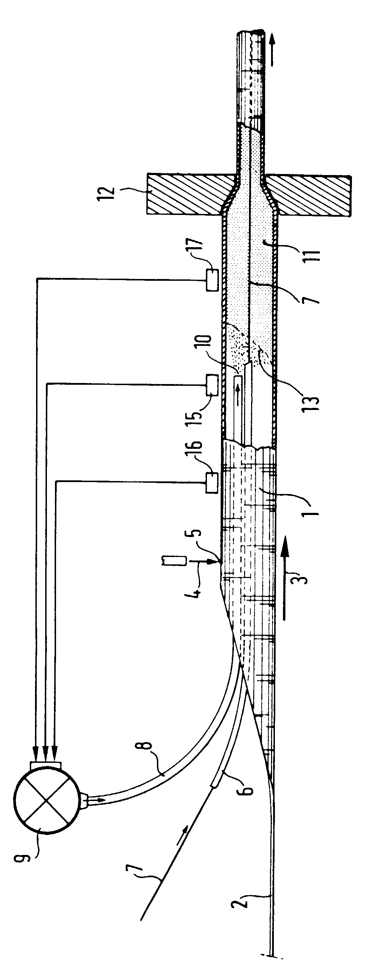

Les caractéristiques et avantages de l'invention ressortiront de la description faite ci-après en regard de la figure unique du dessin ci-annexé, cette figure représentant schématiquement et à titre d'exemple une installation de mise de fibres optiques sous tube de protection et d'injection contrôlée de matière de remplissage dans ce tube de protection, selon l'invention.

Le tube de protection 1 est dans cet exemple métallique. Il est réalisé de manière connue à partir d'une bande métallique 2, qui est déformée progressivement en tube alors lui-même fermé hermétiquement par soudure au laser, sur une ligne d'avance définie par la bande et le tube fermé résultant. On a indiqué par la flèche 3 l'avance de la bande et du tube fermé, par la flèche 4 l'opération de fermeture hermétique ou étanche et en 5 le point de fermeture du tube défiant sur la ligne.

Le tube de protection non encore fermé reçoit un tube de guidage 6 de fibres optiques 7 et un tube d'injection 8 de matière de remplissage. Ces tubes de guidage 6 et d'injection 8 s'étendent dans le tube de protection au-delà de son point de fermeture. Une pompe d'injection 9 est couplée au tube d'injection 8 et l'alimente en matière de remplissage injectée dans le tube de protection. Cette pompe est à débit variable contrôlé. L'extrémité du tube d'injection dans le tube de protection constitue le point d'injection 10 de la matière de remplissage.

Ce tube de protection métallique 1 qui est fermé et contient les fibres 7 et la matière de remplissage injectée 11, peut alors être rétreint au fur et à mesure de son avance, dans un poste de réduction de sa section illustré en 12 mais facultatif dans l'installation.

Selon l'invention, le débit de la pompe d'injection 9 est contrôlé par une détection du front 13 de la matière de remplissage 11 contenue dans le tube de protection et le remplissant, qui est réalisée au fur et à mesure de l'injection de la matière et de l'avance du tube de protection. Cette détection est faite en au moins un point de détection 15 sur la ligne d'avance, pour commander une augmentation du débit de la pompe d'injection si le front de la matière de remplissage n'a pas atteint ce point détection et est donc en aval de celui-ci et pour commander une diminution du débit si le front de la matière de remplissage atteint le point de détection 15 et passe en amont de lui.

Ce point de détection 15 est montré au niveau du point d'injection 10, mais il peut tout aussi bien être en amont ou en aval de ce point d'injection en étant à une distance restant raisonnable de ce point d'injection pour ne pas allonger l'installation ainsi que pour faciliter la détection du front de la matière de remplissage et éviter un remplissage incomplet ou des risques de perturbations de l'opération de soudure laser. Ce point de détection est de toute manière en amont du poste de rétreinte 12 et en aval du point de fermeture 5, en étant distant de ce point de fermeture d'une distance minimale de sécurité pour éviter que la matière de remplissage puisse atteindre ce point de fermeture et pour permettre un temps de détection et réponse suffisant en vue de commander la baisse de débit de la pompe.

La détection de la position du front de la matière de remplissage par rapport au point de détection 15 est avantageusement complétée par une autre détection en un deuxième point de détection 16 en amont du point 15. La détection du front au point de détection 16 est une détection dite de sécurité, qui est faite en aval et à une distance minimale de l'ordre de 10 cm du point de fermeture 5 et qui correspond à un remplissage maximal mais traduit des risques d'excès de matière injectée et commande impérativement une diminution du débit. Elle peut être associée à la détection au premier point 15, pour le maintien du débit à sa valeur, si le front est entre ces deux points de détection.

De manière comparable, la détection du front peut être complétée par une détection en un troisième point de détection 17, en aval du point 15. Cette détection au point 17 est également en tant que telle une détection de sécurité qui traduit les risques de remplissage incomplet dû à un débit insuffisant de la matière injectée et commande l'augmentation impérative du débit de la pompe d'injection 8.

La détection de la position du front de matière de remplissage contenue dans le tube 1 en chaque point de détection est réalisée par un capteur, qui monté en ce point et désigné par la même référence numérique que le point de détection concerné. Chaque capteur est sensible à la présence de la matière de remplissage à son niveau ou à l'une des propriétés de cette matière de remplissage et est relié à la pompe d'injection pour la commande de son débit.

Chaque capteur 15, 16 ou 17 est de préférence monté sur l'extérieur du tube de protection et est en regard et à faible distance de celui-ci. Il peut en variante être monté à l'intérieur du tube de protection, et est alors porté par le tube d'injection 8 ou le tube de guidage 6 ou un support auxiliaire convenable.

Chaque capteur est de préférence un capteur de température, qui détecte la température du tube de protection pour traduire la présence ou non de la matière de remplissage remplissant le tube de protection à son niveau. Il est avantageusement monté en regard de la génératrice de fermeture en long du tube métallique de protection, qui, bien qu'éventuellement refroidi après sa fermeture par soudure laser, conserve une certaine température après la fermeture en particulier sur sa génératrice de fermeture et au voisinage immédiat de celle-ci.

Cette température du tube de protection fermé chute par la présence de la matière de remplissage au contact intérieurement avec la génératrice de fermeture, de sorte qu'une variation de température du tube de protection au point de détection traduit le remplissage jusqu'à ce niveau du tube de protection. Inversement, la température remonte lorsque le tube de protection qui était précédemment rempli jusqu'à ce niveau, ne l'est plus.

En variante, chaque capteur peut être constitué par un détecteur capacitif ou d'un autre type convenable, qui est sensible aux propriétés ou à la nature de la matière de remplissage dans le tube de protection, ou à un effet secondaire dû à la matière de remplissage dans le tube de protection et tel que la température de ce tube. Le type de capteur adopté et son montage intérieur ou extérieur sont choisis en fonction du mode de réalisation et/ou de fermeture tube de protection qui est métallique et est fermé par soudure laser dans l'exemple décrit, mais peut tout aussi bien être en plastique et être extrudé en étant ainsi directement fermé dès le point de départ de son extrusion sur sa ligne de réalisation et d'avance.

## Revendications

1. Procédé d'injection contrôlée d'une matière de remplissage dans un tube de protection de fibres optiques, au cours de la fermeture étanche du tube en un point de fermeture sur une ligne d'avance dudit tube et de mise des fibres dans celui-ci, consistant à réguler le débit de matière injectée dans ledit tube, en un point d'injection situé en aval du point de fermeture, à partir d'un signal de détection de la position du front (13) de la matière contenue dans ledit tube par rapport à un premier point de détection situé en aval du point de fermeture, caractérisé en ce qu'il consiste à effectuer la mesure directement en ce premier point de détection (15) d'une propriété physique spécifique définie que présente ledit tube ou ladite matière elle-même et qui varie avec la position du front de matière par rapport à ce point de détection, pour détecter la position du front de la matière par rapport audit premier point de détection.

2. Procédé selon la revendication 1, caractérisé en ce que ledit premier point de détection (15) est situé sensiblement au niveau dudit point d'injection (10).

3. Procédé selon l'une des revendications 1 et 2, caractérisé en ce qu'il consiste en outre à réaliser la détection du front (13) de la matière de remplissage dans le tube de protection en un deuxième point de détection (16), situé en amont dudit premier point de détection (15) et en aval dudit point de fermeture (5) sur ladite ligne d'avance, en mesurant ladite propriété en ce deuxième point de détection, pour diminuer le débit si le front de matière de remplissage est détecté en ce deuxième point de détection.

4. Procédé selon l'une des revendications 1 à 3, caractérisé en ce qu'il consiste à réaliser la détection du front (13) de la matière de remplissage dans ledit tube de protection en un troisième point de détection (17), situé en aval dudit premier point de détection et séparé d'une distance définie et limitée de celui-ci sur ladite ligne d'avance, en mesurant ladite propriété en ce troisième point de détection, pour augmenter le débit si le front de matière de remplissage est détecté en ce troisième point.

5. Installation de mise en oeuvre du procédé selon l'une des revendications 1 à 4, comportant ladite ligne équipée de moyens de mise des fibres dans ledit tube de protection, de moyens d'injection à débit réglable de ladite matière d'injection dans ledit tube de protection et de moyens de régulation dudit débit, caractérisée en ce que lesdits moyens de régulation de débit comportent un capteur (15, 16, 17) sensible à ladite propriété, monté en chaque point de détection et relié auxdits moyens d'injection (8).

6. Installation selon la revendication 5, caractérisée en ce que chaque capteur (15, 16, 17) est monté sur l'extérieur dudit tube de protection (1), en regard de celui-ci.

7. Installation selon la revendication 5, caractérisée en ce que chaque capteur (15, 16, 17) est monté à l'intérieur dudit tube de protection (1)

8. Installation selon l'une des revendications 6 et 7, caractérisée en ce que chaque capteur est un capteur thermique, sensible à la température dudit tube de protection, au niveau du point de détection concerné, pour détecter une variation de température entre les conditions de présence du front de matière remplissant le tube de protection et d'absence du front de matière à ce niveau dans ledit tube de protection.

9. Installation selon l'une des revendications 6 et 7, caractérisée en ce que chaque capteur est un capteur sensible à un effet dû à la matière de remplissage elle-même, détecté depuis le point de détection concerné et constituant ladite propriété détectée.

## Patentansprüche

1. Verfahren zum gesteuerten Einspritzen einer Füllmasse in ein Schutzrohr für optische Fasern, während des dichten Verschließens des Rohres an einem Verschlußpunkt auf einer fortschreitenden Linie des Rohres und der Anordnung der Fasern in demselben, bestehend aus der Steuerung der Last der eingespritzten Masse in das Rohr, an einem Injektionspunkt, der unterhalb des Verschlußpunktes angeordnet ist, ausgehend von einem Erfassungssignal der Position der Front (13) der Masse, die in dem Rohr enthalten ist, bezüglich eines ersten Erfassungspunktes, der unterhalb des Verschlußpunktes angeordnet ist, dadurch gekennzeichnet, daß es aus der Durchführung einer direkten Messung am ersten Erfassungspunkt (15) einer definierten spezifischen physikalischen Eigenschaft besteht, die das Rohr oder die Masse selbst hat, und die mit der Position der Front der Masse bezüglich des Erfassungspunktes variiert, zur Erfassung der Position der Front der Masse bezüglich des ersten Erfassungspunktes.

2. Verfahren nach Anspruch 1, dadurch gekennzeichnet, daß der erste Erfassungspunkt (15) etwa auf Höhe des Injektionspunktes (10) angeordnet ist.

3. Verfahren nach einem der Ansprüche 1 und 2, dadurch gekennzeichnet, daß es darüber hinaus aus der Realisierung der Erfassung der Front (13) der Füllmasse in dem Schutzrohr an einem zweiten Erfassungspunkt (16) besteht, der oberhalb des ersten Erfassungspunktes (15) und unterhalb des Verschlußpunktes (5) auf der fortschreitenden Linie angeordnet ist, durch Messung der Eigenschaft an dem zweiten Erfassungspunkt, zur Verringerung der Last, wenn die Front der Füllmasse an dem zweiten Erfassungspunkt erfaßt wird.

4. Verfahren nach einem der Ansprüche 1 bis 3, dadurch gekennzeichnet, daß es aus der Realisierung der Erfassung der Front (13) der Füllmasse in dem Schutzrohr an einem dritten Erfassungspunkt (17) besteht, der unterhalb des ersten Erfassungspunktes und getrennt durch eine definierte und begrenzte Distanz von diesem auf der fortschreitenden Linie angeordnet ist, bei Messung der Eigenschaft an dem dritten Erfassungspunkt, zur Erhöhung der Last, wenn die Front der Füllmasse an dem dritten Erfassungspunkt erfaßt wird.

5. Vorrichtung zur Umsetzung des Verfahrens nach einem der Ansprüche 1 bis 4, umfassend die Linie, die mit Einrichtungen zur Anordnung der Fasern in dem Schutzrohr versehen ist, Einrichtungen zum Einspritzen bei steuerbarer Last der Einspritzmasse in das Schutzrohr und Einrichtungen zur Steuerung der Last, dadurch gekennzeichnet, daß die Einrichtungen zur Steuerung der Last einen Aufnehmer (15, 16, 17) umfassen, der die Eigenschaft erfaßt, welcher an jedem Erfassungspunkt angeordnet ist und mit den Einspritzeinrichtungen verbunden ist (8).

6. Vorrichtung nach Anspruch 5, dadurch gekennzeichnet, daß jeder Aufnehmer (15, 16, 17) auf der Außenseite des Schutzrohres (1) montiert ist, gegenüber derselben.

7. Vorrichtung nach Anspruch 5, dadurch gekennzeichnet, daß jeder Aufnehmer (15, 16, 17) auf der Innenseite des Schutzrohres (1) angeordnet ist.

8. Vorrichtung nach einem der Ansprüche 6 und 7, dadurch gekennzeichnet, daß jeder Aufnehmer ein thermischer Aufnehmer ist, der auf die Temperatur des Schutzrohres reagiert, auf der Höhe des betroffenen Erfassungspunktes, zur Erfassung einer Veränderung der Temperatur zwischen den Zuständen der Anwesenheit der Front der Füllmasse für das Schutzrohr und der Abwesenheit der Front der Masse auf der Höhe in dem Schutzrohr.

9. Vorrichtung nach einem der Ansprüche 6 und 7, dadurch gekennzeichnet, daß jeder Aufnehmer ein Aufnehmer ist, der auf einen Effekt aufgrund der Füllmasse selbst reagiert, der ausgehend von dem betroffenen Erfassungspunkt erfaßt wird und die erfaßte Eigenschaft bildet.

## Claims

1. A method of injecting a filler in controlled manner into a protective tube for protecting optical fibers, during leak-tight closure of the tube at a closure point on a line for advancing said tube and putting the fibers into said tube, the method consisting in regulating the delivery rate of the filler being injected into said tube, at an injection point situated downstream from the closure point, on the basis of a detection signal generated by detecting the position of the front (13) of the filler contained in said tube relative to a first detection point situated downstream from the closure point, said method being characterized in that it consists in directly measuring, at the first detection point (15), a defined specific physical property which is exhibited by said tube or said filler itself and which varies with the position of the front of the filler relative to the detection point, so as to detect the position of the front of the filler relative to said first detection point.

2. A method according to claim 1, characterized in that said first detection point (15) is substantially level with said injection point (10).

3. A method according to claim 1 or 2, characterized in that it further consists in detecting the front (13) of the filler in the protective tube at a second detection point (16) situated upstream from said first detection point (15) and downstream from said closure point (5) on said line, by measuring said property at said second detection point, so as to reduce the delivery rate if the front of filler is detected at the second detection point.

4. A method according to any one of claims 1 to 3, characterized in that it consists in detecting the front (13) of the filler in said tube at a third detection point (17) situated downstream from said first detection point and at a defined and limited distance therefrom on said line, by measuring said property at said third detection point, so as to increase the delivery rate if the front of filler is detected at said third point.

5. An installation for implementing the method according to any one of claims 1 to 4, and comprising said line provided with means for putting the fibers into said protective tube, with injection means having an adjustable delivery rate for injecting the filler into said protective tube, and with delivery-rate regulation means for regulating said delivery rate, said installation being characterized in that said delivery-rate regulation means comprise a sensor (15, 16, 17) responsive to said property, mounted at each detection point, and connected to said injection means (8).

6. An installation according to claim 5, characterized in that each sensor (15, 16, 17) is mounted outside said protective tube (1) and facing said tube.

7. An installation according to claim 5, characterized in that each sensor (15, 16, 17) is mounted inside said protective tube (1).

8. An installation according to claim 6 or 7, characterized in that each sensor is a sensor responsive to the temperature of said protective tube, at the detection point in question, so as to detect a temperature variation between the presence of filler in the protective tube and the absence of filler at that level in said protective tube.

9. An installation according to claim 6 or 7, characterized in that each sensor is a sensor responsive to an effect due to the filler itself, which effect is detected from the detection point in question and constitutes said property.
